Europäisches Patentamt
European Patent Office
Office européen des brevets

(19)

(11) Publication number: **0 177 182 B1**

# (12) EUROPEAN PATENT SPECIFICATION

(45) Date of publication of patent specification: **18.12.91** (51) Int. Cl.5: **C08G 73/18**

(21) Application number: **85306213.1**

(22) Date of filing: **02.09.85**

## (54) Two-stage process for producing polybenzimidazoles from dicarboxylic component.

(30) Priority: **31.08.84 US 645952**
**22.02.85 US 704227**

(43) Date of publication of application:
**09.04.86 Bulletin 86/15**

(45) Publication of the grant of the patent:
**18.12.91 Bulletin 91/51**

(84) Designated Contracting States:
**DE FR GB NL**

(56) References cited:
**US-A- 3 551 389**
**US-A- 4 452 972**
**US-A- 4 463 167**

**MACROMOLECULES, vol. 5, no. 6, November-December 1972, pages 807-812; V.V. KORSHAK et al.: "Two-stage synthesis of poly(N-phenylbenzimidazoles)"**

**CHEMICAL ABSTRACTS, vol. 70, no. 22, 2nd June 1969, page 10, abstract no. 97284b, Columbus, Ohio, US; V.V. KORSHAK et al.: "Two-stage synthesis of polybenzimidazoles based on 3,3'-diaminobenzidine and derivatives of terophthalic and 4,4'-diphenyldicarboxylic solds", & IZV. AKAD. NAUK SSSR, SER. KHIM. 1969, (2), 480-1**

**CHEMICAL ABSTRACTS, vol. 79, no. 8, 27th August 1973, pages 2-3, abstract no. 42884c, Columbus, Ohio, US; D.S. TUGUSHI et al.: "Two-stage synthesis and study of aromatic poly(N-phenylbenzimidazoles)", & VYSOKOMOL. SOEDIN., SER. A 1973, 15(5), 969-76**

(73) Proprietor: **CELANESE CORPORATION**
**1211 Avenue of the Americas**
**New York New York 10036(US)**

(72) Inventor: **Ward, Bennet Clayton**
**7932 Park Vista Circle**
**Pineville North Carolina(US)**

(74) Representative: **De Minvielle-Devaux, Ian Benedict Peter et al**
**CARPMAELS & RANSFORD 43, Bloomsbury Square**
**London WC1A 2RA(GB)**

**EP 0 177 182 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention provides a two-stage melt polymerization process for the production of high molecular weight polybenzimidazoles utilizing a free aromatic dicarboxylic acid as monomer.

High molecular weight polybenzimidazoles are polymers of high thermal stability and excellent resistance to oxidative or hydrolytic degradation, which can be formed into shaped articles such as fibers and films having very desirable physical properties. As taught by the published literature, these polymers may be prepared, for example, by melt polymerizing an aromatic tetraamine and a diphenylester or an anhydride of an aromatic or heterocyclic dicarboxylic acid in a one or two stage process; see, for example H.Vogel and C.S. Marvel, Journal of Polymer Science, Vol.L, pages 511-539 (1961); and U.S. Patents Reissue 26,065; 3,174,947; 3,509,108; 3,551,389; 3,433,772; and 3,655,632. In particular, U.S. Patent 3,555,389 discloses a two-stage process for the production of aromatic polybenzimidazoles, in which the monomers are heated at a temperature above 170° C, in a first stage melt polymerization zone until a foamed prepolymer is formed.

The foamed prepolymer is cooled, pulverized, and introduced into a second stage polymerization zone where it is heated again to yield a polybenzimidazole polymer product.

It has also been known to prepare polybenzimidazoles from the free dicarboxylic acids or the methyl esters of such acids rather than the phenyl esters or anhydrides in a melt polymerization process. However, many of the early investigators of these polymers believed that inferior or unsatisfactory polymers resulted from the use of the free acid or the dimethyl ester as the monomer. Thus Vogel and Marvel state in their cited article at page 513 that in attempting to prepare polybenzimidazoles from aromatic dioic acids or their dimethyl esters and aromatic tetraamines, "The use of the free acids and the corresponding dimethyl esters gave inferior results." Moreover, these same two investigators do not mention the free acids or dimethyl esters as monomers in their U.S. Patent No. 3,174,947 in which polybenzimidazoles are disclosed and claimed, nor are the free acids or dimethyl esters mentioned as possible monomers in any of the other cited patents.

In addition to the melt polymerization process described in the foregoing references, a process of preparing polybenzimidazoles has been proposed in which good results are reported to be obtained using a free dicarboxylic acid or a dimethyl ester of such acid as monomer. This process involves the solution polymerization of an inorganic acid salt of an aromatic tetra-amine and a dicarboxylic acid or a derivative thereof such as the dimethyl ester with heat in the presence of polyphosphoric acid (see U.S. Patent 3,313,783 and Iwakura et al, Journal of Polymer Science: Part A, Vol. 2, pages 2605-2615 (1964)). According to this process, the polymer product after completion of the reaction can be separated by pouring the reaction mixture in the form of a polyphosphoric acid solution into a large quantity of water. However, this separation procedure is complicated and, moreover, it is difficult to recover and reuse the polyphosphoric acid.

Despite the disadvantages of processes utilizing a free dicarboxylic acid or methyl or other alkyl ester as monomer in the preparation of polybenzimidazoles, these materials have concomitant advantages over the phenyl esters which are the most widely taught dicarboxylic acid derivatives for the preparation of these polymers. Thus, the free acid and its alkyl esters are generally less expensive than the corresponding phenyl ester and their use does not result in the formation of free phenol as a by-roduct. The formation of free phenol is undesirable because of toxicity problems, and the avoidance or reduction thereof is beneficial.

In view of this there have been attempts to develop processes which utilize a free acid as monomer and result in polymers which can be formed into shaped articles of commercial utility. For example,U.S. Patent 4,312,976 discloses a single-stage process for preparing polybenzimidazoles from a free dicarboxylic acid as monomer, wherein the catalyst is an organic sulfonic acid, a halogenated acetic acid or a non-oxidizing inorganic acid. However, apart from being limited to a specific class of catalysts, this process results in a polymer mass of high viscosity requiring substantial agitation energy, especially in the latter part of the polymerization process. Furthermore, the final polymer is in the form of a solidified mass which is difficult to handle and to dissolve in an appropriate solvent for forming into shaped articles such as fibers.

The present invention provides a two stage process for the production of polybenzimidazoles which makes it possible to achieve various combinations of the advantages and relative disadvantages of the free acid, the alkyl ester and the phenyl ester, in a process which is simple and relatively efficient.

The free acid may be used as sole dicarboxylic component. This substantially eliminates the disadvantages of a one stage process utilizing the free acid as described previously. On the other hand, it usually results (like the known one stage process) in the formation of water contaminated with tetraamine as a by product which is difficult to dispose of.

An alkyl ester (for example a methyl ester) may be used as sole dicarboxylic component. This results in the formation of an alkanol (for example methanol), which allows for easy disposal by combustion of the tetraamine contaminated by product.

A combination of the free acid and an alkyl ester may be used. This provides substantially the advantages of each.

A phenyl ester may be used as part of the dicarboxylic component. Notwithstanding the disadvantages of such esters and the advantages of the free acid and of alkyl esters, it may be desirable sometimes to use a phenyl ester as part of the dicarboxylic component in combination with the free acid and (or the alkyl ester) to achieve some of the process advantages associated with the phenyl esters.

The dicarboxylic component will be more particularly defined below.

## SUMMARY OF THE INVENTION

The invention provides a two stage process for providing polybenzimidazoles comprising heating in a first stage a mixture of at least one aromatic tetraamine containing two pairs of amine substituents on an aromatic ring in ortho position and either (i) at least one free dicarboxylic acid or (ii) a dicarboxylic component which is either 1) a combination of at least one free dicarboxylic acid and at least one diaryl ester of a dicarboxylic acid, or 2) a combination of at least one free dicarboxylic acid and at least one dialkyl ester of a dicarboxylic acid, or 3) a combination of at least one diaryl ester of a dicarboxylic acid and at least one dialkyl ester of a dicarboxylic acid; or 4) a dialkyl ester of a dicarboxylic acid (provided that not more than 95% of the said dicarboxylic component is diaryl ester), the said heating being sufficient to bring the mixture to condensation polymerization temperatures above the melting point of the said tetraamine, continuing the heating with agitation until the agitator torque is from about 1.5 to about 6 times the torque before the rise in viscosity begins, terminating the agitation while continuing to heat the reaction mixture to a temperature of from 230 to 350 °C while allowing the mass to foam to a substantial degree, cooling to a friable foamed mass, crushing the mass to obtain a ground prepolymer and heating the ground prepolymer in a second stage at a temperature in excess of the highest temperature employed in the said first stage with agitation until an inherent viscosity in excess of 0.37 dl/g is obtained.

For example, not more than 50% of the said dicarboxylic component may be diaryl ester.

Depending on the nature and melting point of the starting materials, the polymerizing mass resulting from the first heating is a liquid which may be a slurry of solid dicarboxylic component particles in melted tetraamine, or a homogeneous mixture of tetraamine and dicarboxylic component or an emulsion comprising melted tetraamine and melted dicarboxylic component. The heating is continued to 230-350 °C with concurrent strong agitation until the viscosity of the mixture rises to a point such that the agitator torque is from 1.5 times to 6 times the torque before the increase in viscosity begins to occur.

The agitation is then terminated, and heating is continued while allowing the mass to foam to a friable mass. The resulting prepolymer is then cooled and ground to a powder which is heated in the solid state in a second polymerization stage at a higher temperature than the first stage until the desired degree of polymerization is achieved.

The polybenzimidazoles which can be produced by the process of this invention are those having repeating units of the following formula:

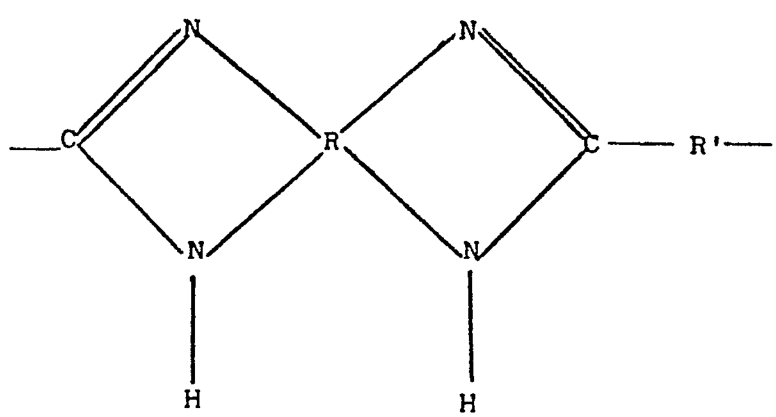

wherein R is a tetravalent aromatic nucleus with the nitrogen atoms forming the benzimidazole rings being paired upon adjacent carbon atoms, i.e., ortho carbon atoms, of the aromatic nucleus, and R' is a divalent

organic radical which is usually a member of the class consisting of an aromatic ring, an alkylene group (preferably having 4 to 8 carbon atoms), and a heterocyclic ring (such as pyridine, pyrazine, furan,quinoline,thiophene, and pyran).

The following generalized equation illustrates the condensation reaction which occurs in forming the polybenzimidazoles having the recurring units of the foregoing formula:

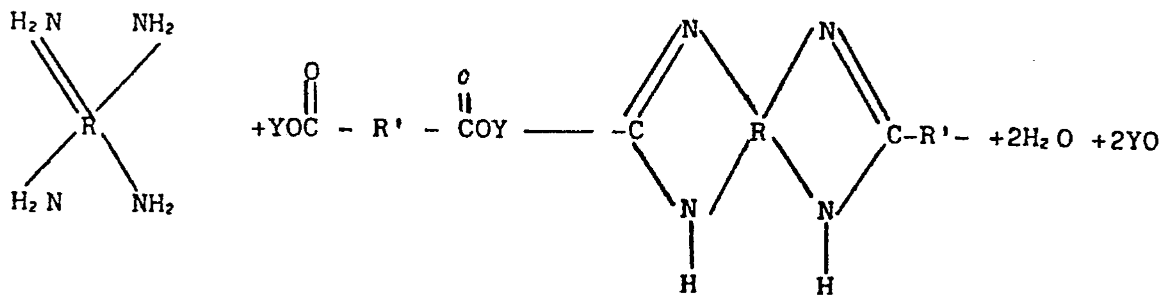

Such polybenzimidazoles may be produced by the reaction of a mixture of (1) at least one aromatic tetraamine containing two groups of amine substituents, the amine substituents in each group being in an ortho position relative to each other, and (2) at least one dicarboxylic component as defined herein.

Examples of aromatic tetraamines which may be used include those with the following formulas:

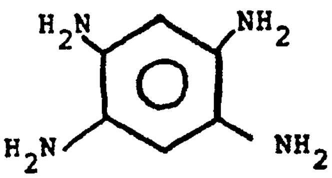

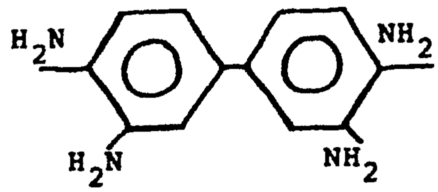

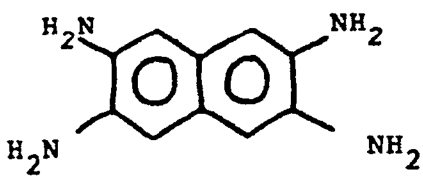

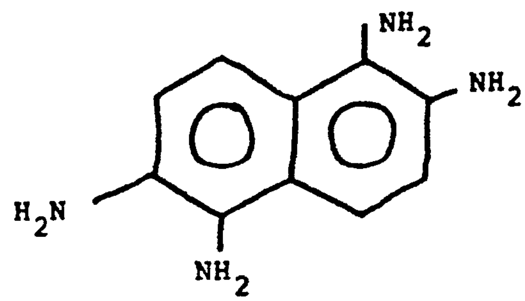

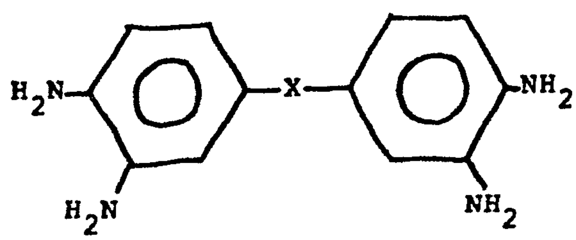

where X represents -O-, -S-, $-SO_2$, -C-, or a lower alkylene group, such as $-CH_2-$, $-(CH_2)_2-$, or $-C(CH_3)_2-$. Among such aromatic tetraamines may be mentioned, for example, 1,2,4,5-tetraaminobenzene; 1,2,5,6-tetraaminonaphthalene; 2,3,6,7-tetraaminonaphthalene; 3,3',4,4' -tetraaminodiphenyl methane; 3,3',4,4' -tetraaminodiphenyl ethane; 3,3',4,4'-tetraminodiphenyl-2,2-propane; 3,3',4,4'-tetraaminodiphenyl thioether; and 3,3',4,4' -tetraaminodiphenyl sulfone. The preferred aromatic tetraamine is 3,3',4,4' -tetraaminobiphenyl.

When free acid alone is not to be used, there may be used a dicarboxylic component which may for example be a mixture of a free acid or acids with at least at one diester and/or monoester; or a mixture of diester(s) and/or monoester(s); or a single dialkyl ester, monoester or mixed aryl-alkyl or alkyl/alkyl ester or esters but cannot consist solely of diphenyl ester.

The dicarboxylic acids which are Suitable for use in free or esterified form (as described above) in the production of polybenzimidazoles by the process of the present invention include aromatic dicarboxylic acids;aliphatic dicarboxylic acids (preferably those having 4 to 8 carbon atoms); and heterocyclic dicarboxylic acids wherein the carboxyl groups are substituents upon carbon atoms in a ring compound (such as pyridine, pyrazine, furan, quinoline, thiophene, and pyran).

The preferred dicarboxylic acids which may be utilized in free or esterified form are aromatic dicarboxylic acids such as those having the following formulae:

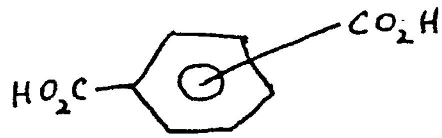

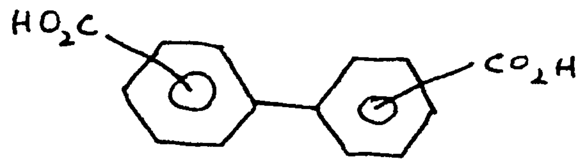

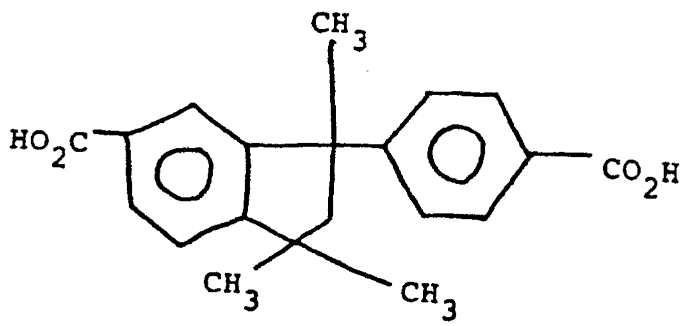

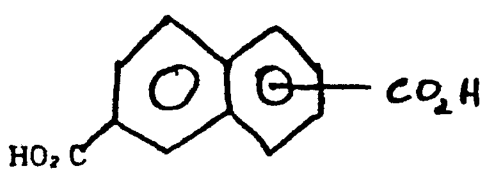

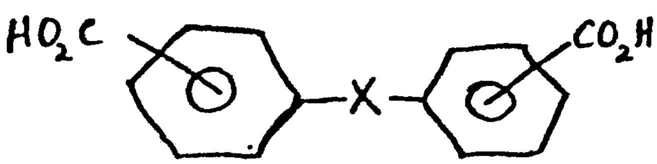

where X is as defined above. For example, the following diacids are suitable isophthalic acid; terephthalic acid; 4,4'-biphenyldicarboxylic acid; 1,4-naphthalenedicarboxylic acid; diphenic acid 2,2'-biphenyldicarboxylic acid);phenylindan; dicarboxylic acid; 1,6-naphthalenedicarboxylic acid; 2,6-naphthalenedicarboxylic acid; 4,4'-diphenylether-dicarboxylic acid; 4,4'-diphenylmethanedicarboxylic acid; 4,4'-diphenylsulfonedicarboxylic acid; and 4,4' diphenylthioetherdicarboxylic acid. Isophthalic acid is the dicarboxylic acid which is free or esterified form is most preferred for use in the process of the present invention.

If the dicarboxylic component is not the free acid then it is preferably one of the following:

1) at least one free dicarboxylic acid and at least one diphenyl ester of a dicarboxylic acid;

2) at least one free dicarboxylic acid and at least one dialkyl ester of a dicarboxylic acid, and

3) at least one diphenyl ester of a dicarboxylic acid and at least one dialkyl ester of a dicarboxylic; and
4) at least one dialkyl ester of a dicarboxylic acid. The dicarboxylic moieties of the compounds of each combination may be the same or different and the alkyl groups of the alkyl esters of combination 2),3) and 4) generally contain 1 to 5 carbon atoms and are most preferably methyl.

It is generally preferred to employ the dicarboxylic component in a ratio of about 1 mole of total dicarboxylic component per mole of aromatic tetraamine. However, the optimal ratio of reactants in a particular polymerization system can be easily determined by one of ordinary skill in the art.

Examples of polybenzimidazoles which may be prepared according to the process of the present invention include:

poly-2,2'- (m-phenylene) -5, 5'-bibenzimidazole;
poly-2,2'- (biphenylene-2"2"') -5,5'-bibenzimidazole;
poly-2,2'- (biphenylene-4"4"')-5,5'-bibenzimidazole;
poly-2,2' -(1",3",3" tramethylindanylene-6",1"-phenylene -4" ')-5,5'-bibenzimidazole;
poly-2,2' - (furylene-2",5")-5,5'-bibenzimidazole;
poly-2,2' (naphthalene-1",6") -5,5'-bibenzimidazole;
poly-2,2'-(amylene -5, 5'-bibenzimidazole;
poly-2,2'-octamethylene -5,5'-bibenzimidazole;
poly-2,2'-(m-phenylene)-diimidazobenzene;
poly-2,2'-cyclohexenyl-5,5'-bibenzimidazole;
poly-2,2'-(m-phenylene)-5,5'-di (bibenzimidazole) ether
poly-2,2'-(m- phenylene)-5,5'-di(bibenzimidazole) sulfide;
poly-2,2'-(m- phenylene)-5,5'-di(bibenzimidazole) sulfone;
poly-2,2'-(m-phenylene) -5,5'-di(bibenzimidazole) methane;
poly-2,2"-(m-phenylene)-5,5"-di(bibenzimidazole) propane-2,2;
poly-2,2"-(m- phenylene)-5,5"-di(bibenzimidazole) ethylene 1,2
where the double bonds of the ethylene groups are intact in the final polymer.

Further examples include:

poly-2,2'-(1",1",3" trimethylindanylene-3"5"-p-phenylene-5,5'-bibenzimidazole;
2,2'-(m-phenylene)-5,5'-bibenzimidazole/2,2-(1", 1",3" -trimethylindanylene)-5",3"-(p-phenylene)-5,5'-bibenzimidazole copolymer;
2,2'-(m-phenylene)-5,5- bibenzimidazole/2,2'-biphenylene-2",2"') -5,5'-bibenzimidazole copolymer;
poly-2,2'-(furylene-2",5")-5,5'-bibenzimidazole;
poly-2,2'-(naphthalene-1",6")-5,5'-bibenzimidazole;
poly-2,2'-(naphthalene-2",6")-5,5'-bibenzimidazole;
poly-2,2'-amylene-5,5' -bibenzimidazole;
poly-2,2'-octamethylene-5,5'- bibenzimidazole;
poly-2,2'-(m-phenylene)-diimidazobenzene;
poly-2,2'-cyclohexenyl-5,5'bibenzimidazole;
poly-2,2'-(m-phenylene)-5,5'-di(benzimidazole);
ether;
poly-2,2'-(m-phenylene)-5,5'-di(benzimidazole) sulfide;
poly-2,2'-(m-phenylene)-5,5'-di(benzimidazole) sulfone;
poly-2,2'-(m-phenylene)-5,5'-di(benzimidazole) propane-2,2; and
poly-ethylene-1,2-2,2"-(m-phenylene)-5,5"-dibenzimidazole) ethylene-1,2

Where the double bonds of the ethylene groups are intact in the final polymer.

The preferred polybenzimidazole prepared by the process of the present invention is poly-2,2'-(m-phenylene) -5,5'-bibenzimidazole, the recurring unit of which is:

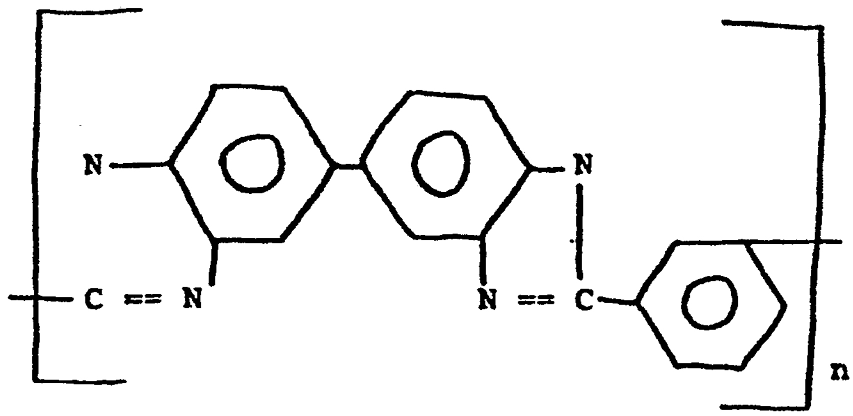

wherein n is an integer in excess of 75.

This polymer can be prepared in accordance with the process of the present invention by the reaction of 3,3',4,4'-tetraaminobiphenyl with isophthalic acid, or with at least one dialkyl isophthlate for example dimethyl isophthalate, or with a combination of isophthalic acid and diphenyl isophthalate or dialkyl isophthalate (for example dimethyl isophthalate), or with a combination of diphenyl isophthalate and dialkyl isophthalate (for example methyl isophthalate).

The polymerization process of this invention can be carried out without a catalyst, but it is preferable to have a catalyst present in order to increase inherent viscosity. Catalysts which may be used include, for example, phosphorus compounds such as triaryl phosphites and diarylphosphites in which the aryl groups may be, for example, phenyl, tolyl or substituted phenyl wherein the substituents may be, for example, alkyl or alkoxy containing up to 4 carbon atoms, trialkyl phosphites wherein the alkyl groups contain up to 4 carbon atoms, triaryl phosphines wherein the aryl group may be phenyl, tolyl, naphthyl, fluorophenyl or methoxyphenyl, and trialkyl phosphines, wherein the alkyl groups may be propyl or butyl, halophosphines such as phenyldichlorophosphine,phosphorustrihalides, phosphorusoxy trihalides, magnesium, manganese and alkali metal hypophosphites, e.g. sodium hypophosphites, and triaryl phosphates, e.g. triphenyl phosphate; tin compounds such as m-butylstannoic acid, dibutyltin oxide, dibutyltin acetate, stannous chloride, stannic chloride, dibutyltin dilaurate, and stannous oxalate; silanes and siloxanes of the formula:

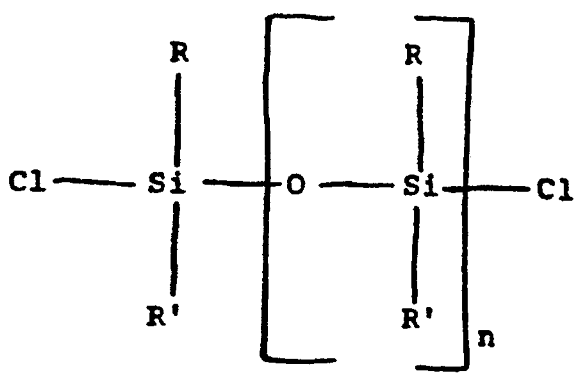

where R and R' may be the same or different and are methyl, phenyl or hydrogen and n is zero or an integer, e.g. up to 5, such as dimethyl-dichlorosilane, diphenyldichlorosilane, methylphenyldichlorosilane, and 1,3-dichloro-1,1,3,3-tetramethylsiloxane; organic sulfonic acids such as p-toluenesulfonic acid,benzeneulfonic acid, methanesulfonic acid, trifluoromethanesulfonic acid, and mixtures of the above, haolgenated acetic acids such as trifluoroacetic acid and trichloroacetic acid,and mixtures of the above and non-oxidizing acids such as sulfuric acid, phosphoric acid or hydrochloric acid. the preferred catalyst is triphenyl phosphite.

The process of the invention may be used to produce polybenzimidazoles of one or more aromatic tetraamines and one or more dicarboxylic acids. In general, stoichiometric quantities of the total tetraamine and dicarboxylic component are utilized.

If a catalyst is employed, it is generally present in an amount, for example, of 1 to 6 mole %,preferably

2 to 4 mole %, based on the total tetraamine or dicarboxylic acid component.

The first stage of the process of the invention is carried out by heating the aromatic tetraamine and dicarboxylic component(and catalyst, if used) with strong agitation to a temperature in the range of 230 - 350 °C and preferably 280 - 340 °C. Depending on the melting point of the dicarboxylic component and the chemical nature of the tetraamine and the dicarboxylic component, the liquid mass being agitated will be a slurry, a homogenous mixture or an emulsion of two immiscible liquids. When the viscosity of the reacting mass begins to rise as indicated by increased torque on the agitator manifested by increased energy of agitation, the agitation is discontinued and the mass heated further and allowed to foam. The point at which the agitation is discontinued is generally such that the agitator torque is from 1.5 to 6 times the torque before the rise in viscosity begins. The mass is then heated further without agitation to a temperature in the range, for example, of 230 to 350 °C above the melting point of the tetraamine. Such heating is continued for a period of time in the range, for example, of 0.25 to 3 hours and preferably 0.5 to 1.5 hours. The foamed mass is then cooled to a temperature below its melting point, e.g. room temperature, which causes it to set as a solid friable mass which is easily crushed or ground. In general, the inherent viscosity of the prepolymer after the first stage is complete is in the range, for example, of about 0.05 to 0.3 dl/g (all inherent viscosities being measured from a solution of 0.4% by weight of polymer in 97% sulfuric acid at 25 °C).

The ground prepolymer is then further heated with normal agitation in a second stage at a temperature, for example, of 300 to 420 °C, preferably 360 to 400 °C, for a period, for example of 0.25 to 4 hours, preferably 0.5 to 2 hours, until the desired degree of polymerization is attained.

When poly-2,2'-(m-phenylene)-5,5'-bibenzimidazole is produced from 3,3'4,4'-tetraaminobiphenyl and an isophthalic component using the monomers and process of this invention, the first stage may be carried out at a temperature of for example, 230 to 350 °C, preferably 280 to 340 °C, for a period of time, of for example, 0.25 to 3 hours, preferably 0.5 to 1.5 hours.

The two stage process of this invention has processing advantages over one stage processes using a free dicarboxylic acid as monomer proposed previously in which the process is carried out with agitation until the viscosity increase overcomes the torque of the stir motor and locks and/or breaks the agitator. The solid polymer produced in this manner is generally in the form of a lump which is difficult to remove from the reactor and difficult to process into shaped articles such as fibers.

When the dicarboxylic component is free isophthalic acid, it avoids the problems associated with a process (even a two stage process) for the polymerization of diphenylisophthalate with 3,3'4,4'-tetraaminobiphenyl. However, use of isophthalic acid in the previous process which employed diphenylisophthalate has been found to result in polymers of darker color and lower inherent viscosity than those formed with diphenyl isophthalate via this process, or isophthalic acid via the process of this invention.

In addition to the processing advantages made possible by the two stage process of this invention, the process also results in polymers having relatively high inherent viscosities, which is an indication of molecular weight, and relatively high plugging values, which is a filterability measurement indicating the amount of insoluble gels and solid particles present in the polymer.

In both stages of the process of the present invention, a pressure is employed which is preferably substantially equal to or greater than atmospheric pressure, e.g. one to two atmospheres, and most preferably atmospheric pressure. Such a pressure is commonly obtained by employing an open polymerization system provided with a condenser in order to remove the compounds which are produced as by-products of the reaction.

Both stages of the process may be conducted in a substantially oxygen-free atmosphere. For example, an inert gas such as nitrogen or argon can be continuously passed through the reaction zone during the polymerization. The inert gas employed should be substantially oxygen-free, i.e. it should contain less than 20 p.p.m. of oxygen,preferably less than 8 p.p.m., and more preferably, be entirely oxygen-free. The inert gas may be introduced into the reaction zone at a rate of flow measured at standard conditions, that is, atmospheric pressure and temperature, 1 to 200 percent of the volume of the reaction zone per minute. The inert gas may be passed into the polymerization reaction zone at room temperature or, if desired, it may be pre-heated to the reaction temperature.

The process of the present invention can be used to produce a high molecular weight polybenzimidazole product as indicated by relatively high inherent viscosity. Such products exhibit an inherent viscosity of, for example, at least 0.4 dl/g when measured at a concentration of 0.4 g. of the polymer in 100 ml. of 97 percent $H_2SO_4$ at 25 °C. Preferably, the polymer exhibits an inherent viscosity of at least 0.5 dl/g, and the inherent viscosity is most preferably at least 0.6 dl/g.

The following Examples further illustrate the invention. The inherent viscosities mentioned in the

examples were measured as a 0.4% solution in 97% concentrated sulfuric acid at 25° C while the plugging values were measured by forming a 5% solution of the polymer in 97% sulfuric acid or a 6% solution in dimethyl acetamide containing 2% lithium chloride and filtering the solution at 25° C and one atmosphere pressure through a Gelman Type A gloss paper filter. The plugging value, which is the number of grams of polymer solution filtered per unit area in infinite time, is expressed in grams of polymer per square centimeter. A higher value indicates a polymer solution containing less gels and insolubles.

EXAMPLE I

Into a four-necked, one-liter, round bottomed flask equipped with a nitrogen inlet and outlet, a mechanical stirrer, a thermocouple and a condenser was placed 30.0 g (0.181 mol) of isophthalic acid and 38.7g (0.181 mol) of 3,3'4,4'-tetraaminobiphenyl and 2.2 g (7.2 mmol) triphenylphosphite. The flask was degassed and filled with nitrogen. The degassing was repeated at least three times. The flask was then heated with an oil bath at 350° C/hr to 300° C. Stirring was maintained at 300 rpm until condensate evolution began to slow and a rapid torque increase on the stir motor was seen. Stirring was terminated when the torque increased to 150 mV from a value before viscosity increase of 30mV. The oil and polymer temperatures were 270° C and 242° C, respectively, at this point. The oil bath temperature was increased to 300° C and held at that temperature for one hour. The foam height in the flask was 10.0 cm. The initial height of reactants in the flask was approximately 1.5 cm. The resulting product was cooled to room temperature and then was ground. The ground prepolymer was placed in a flask, the degassing cycles described above were repeated, and the prepolymer was heated with stirring at 60 rpm at 380° C for 1.5 hours. The resulting polybenzimidazole exhibited an inherent viscosity of 0.63 dl/g and a dimethylacetamide (DMAc) plugging value (PV) of 1.83 g/cm.

As a control, the polybenzimidazole of this example was prepared according to the procedure described except that agitation of the initial heating step terminated at an oil and polymer temperature of 250° and 222° C, respectively, and agitation was terminated before viscosity began to build as evidenced by constant torque readings on the agitator motor. The first stage foam height was 5.5 cm. The resulting polybenzimidazole exhibited an inherent viscosity of 0.44 dl/g and a dimethylacetamide (DMAc) plugging value (PV) of 1.05 g/cm.

EXAMPLE II

The procedure of Example I was repeated and stirring was terminated when the torque increased to approved 120 mV from a value before viscosity increase of 30 mV. The first stage was heated to 300° C and held at that temperature for 1 hour. The second stage was heated to 380° C and held at that temperature for 2 hours. The resulting polybenzimidazole exhibited an inherent viscosity of 0.64 dl/g (measured at 0.4% concentration in sulfuric acid), a dimethylacetamide (DMAc) plugging value (PV) of 6.0 g/cm and a sulfuric acid PV of 0.46 g/cm.

EXAMPLE III

The polybenzimidazole of Example II was repeated except that stirring was terminated when the torque increased to 120 mV from a value before viscosity increase of 30 mV, and the first stage was heated to 280° C and held at that temperature for 30 minutes. The second stage was heated to 380° C and held at that temperature for 60 minutes. The resulting polybenzimidazole exhibited an inherent viscosity of 0.62 dl/g (measured at 0.4% concentration in sulfuric acid), a dimethylacetamide (DMAc) plugging value (PV) of 18 g/cm and a sulfuric acid PV of 0.13 g/cm.

EXAMPLE IV

The procedure of Example II was repeated except that stirring was terminated when the torque increased to 120 mV from a value before viscosity increase of 30 mV, and 3.3 g of triphenylphosphite catalyst was used. The resulting polybenzimidazole exhibited an inherent viscosity of 0.57 dl/g (measured at 0.4% concentration in sulfuric acid), a dimethylacetamide (DMAc) plugging value (PV) of 22 g/cm and a sulfuric acid PV of 0.52 g/cm.

EXAMPLE V

The procedure of Example II was repeated except that stirring was terminated when the torque increased to 120 mV from a value before viscosity increase of 30 mV, and 1.1 g of triphenylphosphite catalyst was used. The resulting polybenzimidazole exhibited an inherent viscosity of 0.40 dl/g (measured at 0.4% concentration in sulfuric acid), a dimethylacetamide (DMAc) plugging value (PV) of 22 g/cm and a sulfuric acid PV of 2.5 g/cm.

COMPARATIVE EXAMPLE A

In a control to show the effect of using isophthalic acid in place of diphenylisophthalate in a two-stage polymerization without the novel reaction conditions disclosed in Examples I-V, isophthalic acid, 3,3',4,4'-tetraaminobiphenyl and triphenylphosphite, in the amount of Example I, were placed in a three-necked, round bottomed flask fitted as in Example II. The flask was degassed and filled with nitrogen three times. The flask was then heated with an oil bath at 350 °C/hr to 270 °C. Stirring was maintained at 60 rpm until condensate began to evolve, at which time agitation was terminated with substantially no increase in torque. Very little foaming was observed. The 270 °C temperature was held for 1.5 hours. The resulting product was cooled to room temperature and was ground. The ground prepolymer was placed in a flask, degassed and filled with nitrogen three times, and heated with 60 rpm stirring to 360 °C. The temperature was held for 1.0 hours. The resulting polybenzimidazole exhibited an inherent viscosity of 0.40 dl/g (measured at 0.4% concentration in sulfuric acid), and a sulfuric acid PV of 0.20 g/cm.

Yields in the foregoing examples were all greater than 90%.

EXAMPLE VI to XIII

The procedure of Example I was followed except that certain process conditions were varied. These variations and the properties of the polymers obtained are shown in Table I:

TABLE I

| EXAMPLE | 1ST STAGE TEMP (°C) | 1ST STAGE TIME (hr) | 2ND STAGE TEMP (°C) | 2ND STAGE TIME (hr) | TPP[1] (mol %) | IV 1[2] (dl/g) | IV 2[3] (dl/g) | ACID PV[4] (g/cm$^2$) | DMAc PV[5] (g/cm$^2$) |
|---|---|---|---|---|---|---|---|---|---|
| VI | 250 | 0.5 | 360 | 1.0 | 2 | 0.09 | 0.37 | 2.5 | 22 |
| VII | 280 | 0.5 | 360 | 1.0 | 2 | 0.11 | 0.37 | 2.5 | 16.9 |
| VIII | 280 | 0.5 | 380 | 1.0 | 2 | 0.13 | 0.37 | 2.5 | 22 |
| IX | 280 | 0.5 | 380 | 1.0 | 4 | 0.12 | 0.62 | 0.13 | 18.0 |
| X* | 280 | 0.5 | 380 | 1.0 | 6 | 0.09 | 0.57 | 0.52 | 22 |
| XI | 300 | 0.5 | 380 | 1.0 | 6 | 0.16 | 0.61 | 0.74 | 22 |
| XII | 320 | 0.5 | 380 | 1.0 | 6 | 0.17 | 0.51 | 0.42 | 22 |
| XIII | 300 | 1.0 | 380 | 1.5 | 4 | 0.16 | 0.61 | 0.37 | 1.9 |
| XIV | 300 | 1.0 | 380 | 2.0 | 4 | 0.19 | 0.63 | 0.43 | 6.9 |
| XV | 300 | 1.0 | 380 | 2.0 | 4 | - | 0.60 | 0.44 | - |
| XVI | 300 | 1.0 | 380 | 1.5 | 4 | 0.17 | 0.65 | 0.39 | 3.8 |
| XVII | 300 | 1.0 | 380 | 1.5 | 4 | 0.17 | 0.64 | 0.65 | 3.7 |
| XVIII | 300 | 1.0 | 380 | 2.0 | 4 | 0.14 | 0.67 | 0.46 | 7.3 |

1 Triphenylphosphite.

2 First Stage.

3 Second Stage.

4 97% $H_2SO_4$ a filterability measurement.

5 A filterability measurement with N,N-dimethylacetamide.

*Second Stage Polymer Hardened and Locked Agitator.

NOTE: For all runs, initial torque was 30-35 mV. Torque at agitation termination was 90-100 mV.

## COMPARATIVE EXAMPLE B

First stage foamed prepolymers were synthesized using either (1) isophthalic acid (IPA) according to the procedure in Example II, or (2) diphenylisophthalate (DPIP) according to the procedure in H. Vogel and

C.S. Marvel, Journal of Polymer Science, Vol. L., pages 511-539. These materials were compared in Instron compressive crush tests. The average crushing load for the IPA-based foams was 900 to 1000 g. The average crushing load for the DPIP-based foams was 2000 to 3400 g. These results and also the results obtained by crushing a standard type of polyurethane foam are shown in Table 2.

**TABLE II**

| RUN | MATERIAL | CRUSHING LOAD (g) AVERAGE | CRUSHING LOAD (g) MAXIMUM |
|---|---|---|---|
| 1 | Polyurethane Foam 5 x 5 x 1.9 | 400 | 1175 |
| 2 | DPIP-Based Foam 5. x 5 x 2.5 | 2000 | 5000 |
| 3 | DPIP-Based Foam 5 x 5 x 3.8 | 2000 | 4100 |
| 4 | DPIP-Based Foam 3.8 x 3.8 x 3.8 | 2500 | 4700 |
| 5 | DPIP-Based Foam 6.4 x 3.8 x 5 | 3400 | 4700 |
| 6 | IPA-Based Foam 3.8 x 3.8 x 3.8 | 900 | 1400 |
| 7 | IPA-Based Foam 3.8 x 3.8 x 3.8 | 1000 | 1700 |

Instron set at 2"/min(5 cm/min), 5000 g full scale. Dimensions in Table 2 are in inches(cm) (1 x w x t). DPIP foam made in a 11 resin kettle at 270° C for 1.5 hr. IPA -isophthalic acid; DPIP-diphenylisophthalate.

EXAMPLE XIX

Into a three-necked, one-liter, round bottomed flask equipped with a nitrogen inlet and outlet, a mechanical stirrer and a condenser was placed 10.0g (41.3 mmol) of 4,4'-biphenyldicarboxylic acid, 8.84g (41.3 mmol) of 3,3',4,4'-tetraaminobiphenyl (TAB) and 0.51g (1.65mmol, 4 mol %) triphenylphosphite (TPP). The flask was degassed and filled with nitrogen. The degassing was repeated at least three times. The flask was then heated with an oil bath at 350° C/hr to 280° C. Stirring was maintained at 300 rpm until condensate evolution began to slow the torque increased to 90-100 mV from a value before viscosity increase of 30 mV. The oil bath temperature of 280° C was held for 30 minutes. The resulting product was cooled to room temperature and then was ground. The inherent viscosity (IV) of this first stage product was 0.15 dl/g. The ground prepolymer was placed in a flask, the degassing cycles described above were repeated, and the prepolymer was heated with stirring at 60 rpm at 380° C for 30 minutes. The resulting polybenzimidazole exhibited an inherent viscosity of 0.53 dl/g. The yield was 13.2g (34.5 mmol) or 83%. The polymer was soluble at 6% solids in dimethylacetamide (DMAc)/2% LiCl.

EXAMPLE XX

The procedure of Example XIX was repeated except that 10.0g (41.3 mmol) of 2,2'-biphenyldicarboxylic

acid (diphenic acid) was used instead of 4,4'-biphenyldicarboxylic acid and the torque increased to 90-100 mV from a value before viscosity increase of 30 mV. The first stage IV was 0.12 dl/g and the second stage IV was 0.54 dl/g. The isolated yield was 13.4 g (34.8 mmol) or 84%. The polymer was soluble at 6% solids in dimethylacetamide (DMAc)/2% LiCl.

EXAMPLE XXI

The procedure of Example XX was repeated except that 30.0 g (124 mmol) diphenic acid, 26.5 g (124 mmol) 3,3',4,4'-tetraaminobiphenyl (TAB) and 1.51g (4.9 mmol, 4 mol%) triphenylphosphite (TPP) was used and the torque increased to 90-100 mV from a value before viscosity increase of 30 mV. The first stage was heated to 300 °C and held for 60 minutes, and the second stage was heated to 380 °C and held for 90 minutes. The resulting polybenzimidazole had an IV 0.61 dl/g and a sulfuric acid plugging value (PV) of 0.53 g/cm$^2$. The isolated yield was 45.1 g (117 mmol) or 95%.

EXAMPLE XXII

The procedure of Example XXI was repeated except that the first stage was heated to 340 °C and held at that temperature for 60 minutes. The second stage was heated to 380 °C and held at that temperature for 90 minutes. The resulting polybenzimidazole exhibited an IV of 0.61 dl/g and a sulfuric acid PV of 0.23 g/cm$^2$. The isolated yield was 41.9g (109 mmol) or 88%.

EXAMPLE XXIII

The procedure of Example XXI was repeated except that phenylindandicarboxylic acid (PIDA), also identified as 3-(4-carboxyphenyl)-2,3-dihydro-1,1,3-trimethyl-1H-indene-5-carboxylic acid (Chemical Abstract Service registry number 3569-18-4) was used in place of diphenic acid and the torque increased to 90-100 mV from a value before viscosity increase of 30 mV. The weights used were 30.0 g (92.6 mmol) phenylindandicarboxylic acid (PIDA), 19.8 g (92.6 mmol) 3,3',4,4'-tetraaminobiphenyl (TAB) and 1.14 g (3.81 mmol, 4 mol %) triphenylphosphite (TPP). The first stage polymer had an IV of 0.12 dl/g, and the second stage polymer had an IV of 0.63 dl/g and a sulfuric acid PV of 2.5 g/cm$^2$. The isolated yield was 41.4 g (88.8 mmol) or 96%. The polybenzimidazole produced was soluble at 6% solids in dimethylacetamide (DMAc)/2% LiCl.

EXAMPLE XXIV

Into a three-necked, one-liter, round bottomed flask equipped with a nitrogen inlet and outlet, a mechanical stirrer, and a condenser were placed 29.29g (90.40 mmol) of phenylindan dicarboxylic acid (PIDA), also identified as 3-(4-carboxyphenyl)-2,3-dihydro -1,1,3-dihydro-1,1,3-trimethyl-1H-indene-5- carboxylic acid (Chemical Abstract Service registry number 3569-18-4),28.75g(90.41 mmol) of diphenyl isophthalate (DPIP), 38.68g (180.8 mmol) of 3, 3'4,4' - tetraaminobiphenyl (TAB) and 2.27g (7.31 mmol) of triphenyl phosphite (TPP). The mol % ratio of PIDA to DPIP was 50:50 based on the total dicarboxylic component. The flask was degassed and filled with nitrogen and the degassing was repeated at least three times. The flask was then heated with an oil bath at 350 °C/hr to 300 °C. Stirring was maintained at 300 rpm until condensate evolution began to slow and the torque increased to 90-100 mV from a value before viscosity increase of 30 mV. The oil bath temperature was held at 300 °C for one hour during which time the foam height in the flask increased to 8 cm. from an initial height of reactants in the flask of approximately 1 cm. The resulting first stage product which had an inherent viscosity (IV) of 0.17 dl/g. was cooled to room temperature and then was ground. The ground prepolymer was placed in a flask, and degassing cycles described above were repeated, and the prepolymer was heated with stirring at 60 rpm at 380C for 1.5 hours. The resulting second stage polybenzimidazole had an inherent viscosity (IV) of 0.51 dl/g and a sulfuric acid plugging value (PV) greater than 5g/cm$^2$. The isolated yield was 57.0g or 82%.

EXAMPLE XXV

The procedure of Example XXIV was followed except that a 75:25 mol % ratio of PIDA:DPIP was used. The weights were 43.91g (135.5 mmol) PIDA and 14.38g (45.22 mmol) DPIP. The resulting first stage polymer had an IV of 0.14 dl/g. The resulting second stage polymer had an IV of 0.45 dl/g and a sulfuric acid PV of greater than 5g/cm. The isolated yield was 75. 80g or 98%.

EXAMPLE XXVI

The procedure of Example XXIV was followed except that a 67:33 mol% ratio of diphenic acid:DPIP was used. The weights were 21.86g (90.37 mmol) diphenic acid (2,2'-biphenyldicarboxylic acid) and 28.76 (45.22 mmol) DPIP. The resulting first stage polymer had an IV of 0.23 dl/g. The resulting second stage polymer had an IV of 0.89 dl/g and a sulfuric acid PV of 0.06 g/cm.

EXAMPLE XXVII

The procedure of Example XXVI was followed except that about a 75:25 mol% ratio of diphenic acid: DPIP was used. The weights were 30.80g (127.3 mmol) diphenic acid and 14.37 g (45.19 mmol) DPIP. The resulting first stage polymer had an IV of 0.23 dl/g. The resulting second stage polymer had an IV of 0.79 dl/g and a sulfuric acid PV of 0.33g/cm. The isolated yield was 54.8g or 83%.

The polymers of Examples XXIV and XXV are 2,2'-(m-phenylene)-5,5'-bibenzimidazole/2,2'-(1",1",3"-trimethylindanylene -5",3"-p-phenylene)-5 5'-bibenzimidazole copolymers, and the polymers of Examples XXVI and XXVII are 2,2'-(m-phenylene)-5,5'-bibenzimidazole/2,2'-(biphenylene-2",2"') -5,5'-bibenzimidazole copolymers, all of which are new compositions of matter. The relative number of each benzimidazole unit in the polymer chain depends on the molar ratio of the dicarboxylic compounds used in the polymerization.

Example XXVIII illustrates the process of this invention utilizing a combination of a free dicarboxylic acid and the dimethyl ester of the same acid to form a polybenzimidazole, viz. poly-2,2'(-m-phenylene)-5,5'-bibenzimidazole.

EXAMPLE XXVIII

Into a three-necked, one liter, round bottomed flask, equipped with a nitrogen inlet and outlet, a mechanical stirrer attached to a torque measuring device and a condenser was placed 15.02 g (90.48 mmol) isophthalic acid, 17.55 g (90.46 mmol) dimethyl isophthalate (for a mol% ratio of free acid to dimethyl ester of 50:50), 38.68 g (180.75 mmol) 3,3', 4,4'-tetraaminobiphenyl and 2.25 g (7.26 mmol) triphenyl phosphite. The flask was degassed and filled with nitrogen. The degassing was repeated at least three times. The flask was then heated in an oil bath at 350°C/hr to 300°C. Stirring was maintained at 300 rpm until condensate evolution began to slow and torque on the stir motor had increased from 30 mV to approximately 120mV. At this point agitation was terminated and the polymerizing mass allowed to foam. The oil bath temperature was held at 300°C for 60 minutes. The resulting product was cooled to room temperature and ground. The inherent viscosity of this first-stage product (measured at 0.4% concentration in 97% sulfuric acid) was 0.17 dl/g. The ground prepolymer was placed in a flask, the degassing cycles described above were repeated, and the prepolymer heated with stirring at 60 rpm at 380°C for 90 minutes. The resulting red-brown polybenzimidazole exhibited an inherent viscosity of 0.48 dl/g. The yield was 49 g (159.1 mmol) or 88%.

Examples XXIX, XXX and XXXI illustrate the process of this invention utilizing a combination of dimethyl and diphenyl esters of the same dicarboxylic acid to prepare a polybenzimidazole, viz. the same polymer as Example XXVIII.

EXAMPLE XX1X

The procedure of Example XXVIII was followed with a combination of dimethyl and diphenyl esters of the same dicarboxylic acid in 50:50 mol % ratio. The materials used were : diphenyl isophthalate (28.73 g, 90.35 mmol), dimethyl isophthalate (17.54 g, 90.41 mmol), 3,3',4,4' - tetraaminobiphenyl (38.68 g, 180.7 mmol) and triphenyl phosphite (2.30 g, 7.42 mmol). The resulting first-stage prepolymer had an IV of 0.16 dl/g. The resulting second-stage polymer was dark gold and had an IV of 0.62 dl/g. The yield was 50.8 g (165 mmol) or 91%.

EXAMPLE XXX

The procedure of Example XXIX was followed with about 75:25 mol% ratio of dimethyl to diphenyl ester. The materials used were: diphenyl isophthalate (14.37 g, 45.19 mmol), dimethyl isophthalate (28.29g, 145.8 mmol), 3,3',4,4', - tetraaminobiphenyl (38.67 g, 180.7 mmol) and triphenyl phosphite (2.27 g, 7.32 mmol). The resulting first-stage prepolymer had an IV of 0.15 dl/g. The resulting second-stage polymer was dark gold and had an IV of 0.43 dl/g.and a plugging value, as measured in a 5% solution in 97% sulfuric

acid, of 0.46 g/cm$^2$. The yield was 49.5g (161 mmol) or 89%.

EXAMPLE XXXI

The procedure of Example XXIX was followed with about a 90:10 mol% ratio of dimethyl to diphenyl ester. The materials used were: diphenyl isophthalate (5.79 g, 18.21 mmol), dimethyl isophthalate (31.59 g, 162.8 mmol),3,3', 4,4' -tetraaminobiphenyl (38.67 g, 180.7 mmol) and triphenyl phosphite (2.30 g, 7.42 mmol). The resulting first-stage prepolymer had an IV of 0.16 dl/g. The resulting second-stage polymer was dark gold and had an IV of 0.42 dl/g.and a plugging value as measured in a 5% solution in 97% sulfuric acid, of 1.94 g/cm$^2$. The yield was 31.5 g (102 mmol) or 57%.

Examples XXXII to XXXV illustrate the preparation of the same polybenzimidazole as was prepared in Examples XXVIII to XXXI using a combination of free dicarboxylic acid and a diphenyl ester of the same acid as the dicarboxylic component of the polymerization.

EXAMPLE XXXII

The procedure of Example XXVIII was followed with about a 50:50 mol% ratio of free acid to diphenyl ester. The materials used were: isophthalic acid (15.02g,90.41 mmol), diphenyl isophthalate (28.74g, 90.29 mmol), 3,3',4,4'-tetra-aminobiphenyl(38.67 g, 180.5 mmol) and triphenyl phosphite (2.26 g, 7.29 mmol). The first stage prepolymer had an IV of 0.20 dl/g. while the second stage polymer had an IV of 0.63. The yield was 55.0 g (179 mmol) or 99%.

EXAMPLE XXXIII

The procedure of Example XXXII was followed with about a 75:25 mol% ratio of free acid to diphenyl ester. The materials used were: isophthalic acid (22.50 g, 135.4 mmol), diphenyl isophthalate (14.38 g., 45.18 mmol)3,3',4,4'-tetra-aminobiphenyl (38.69 g., 180.6 mmol) and triphenyl phosphite (2,26 g, 7.29 mmol). The first stage prepolymer had an IV of 0.17 dl/g. while the second stage polymer had an IV of 0.42 dl/g. The yield was 54.6 g (177.0 mmol), or 98%.

EXAMPLE XXXIV

The procedure of Example XXXII was followed with about a 90:10 mol% ratio of free acid to diphenyl ester. The materials used were isophthalic acid (27.00 g.,162.5 mmol), diphenyl isophthalate (5.75 g, 18.06 mmol),3,3',3,4' - tetra-aminobiphenyl (38.67g. 180.5 mmol) and triphenyl phosphite (2.24 g, 7.26 mmol). The first stage prepolymer had an IV of 0.17 dl/g. while the second stage polymer had an IV of 0.49 dl/g. and a sulfuric acid PV of 1.4 g/cm$^2$. The yield was 52.7 g (171 mmol) or 95%.

EXAMPLE XXXV

The procedure of Example XXXII was followed with about a 95:5 mol% ratio of free acid to diphenyl ester. The materials used were isophthalic acid (28.51 g,171.6 mmol), diphenyl isophthalate (2.90 g, 9.11 mmol),3,3'4,4'-tetraaminobiphenyl (38.67 g, 180.7 mmol) and triphenyl phosphite (2.24 g, 7.23 mmol). The first stage prepolymer had an IV of 0.17 while the second stage propolymer had an IV of 0.50 and a sulfuric acid PV of 1.6. The yield was 51.2 g (166 mmol) or 92%.

Example XXXVIII illustrates the process of this invention utilizing a dimethyl ester as the sole dicarboxylic compound.

EXAMPLE XXXVI

This example illustrate the formation of poly-2,2'-(naphthalene -2",6")-5,5'-bibenzimidazole using a dimethyl ester as the sole dicarboxylic component of the polymerization.

The procedure of Example XXVIII was followed using dimethyl-2, 6-naphthalenedicarboxylate as the sole dicarboxylic component except that the first stage was carried out at 340°C for one hour. The materials used were dimethyl -2,6-naphthalenedicarboxylate(38.1 g, 157 mmol), 3,3'4,4'-tetraaminobiphenyl (33.79g, 157.7 mmol) and triphenyl phosphite (1.95 g, 6.29 mmol). The first stage prepolymer had an IV of 0.27 dl/g. while the second stage polymer had an IV of 0.30dl/g. and a sulfuric acid PV of 2.1 g/cm$^2$. The yield was 45.03 g (146.2 mmol) or 93%.

## Claims

1. A two stage process for providing polybenzimidazoles comprising heating in a first stage a mixture of at least one aromatic tetraamine containing two pairs of amine substituents on an aromatic ring in ortho position and either (i) at least one free dicarboxylic acid or (ii) a dicarboxylic component which is either 1) a combination of at least one free dicarboxylic acid and at least one diaryl ester of a dicarboxylic acid, or 2) a combination of at least one free dicarboxylic acid and at least one dialkyl ester of a dicarboxylic acid, or 3) a combination of at least one diaryl ester of a dicarboxylic acid and at least one dialkyl ester of a dicarboxylic acid; or 4) a dialkyl ester of a dicarboxylic acid (provided that not more than 95% of the said dicarboxylic component is diaryl ester), the said heating being sufficient to bring the mixture to condensation polymerization temperatures above the melting point of the said tetraamine, continuing the heating with agitation until the agitator torque is from about 1.5 to about 6 times the torque before the rise in viscosity begins, terminating the agitation while continuing to heat the reaction mixture to a temperature of from 230 to 350 °C while allowing the mass to foam to a substantial degree, cooling to a friable foamed mass, crushing the mass to obtain a ground prepolymer and heating the ground prepolymer in a second stage at a temperature in excess of the highest temperature employed in the said first stage with agitation until an inherent viscosity in excess of 0.37 dl/g is obtained.

2. The process of Claim 1 wherein the aromatic tetraamine is 3,3',4,4'-tetraaminobiphenyl.

3. The process of Claim 1 or 2 wherein the aromatic tetraamine is heated with free dicarboxylic acid which is isophthalic acid.

4. The process of Claim 1 or 2 wherein the aromatic tetraamine is heated with free dicarboxylic acid which is diphenic acid and/or 4,4'-biphenyldicarboxylic acid and/or phenylindandicarboxylic acid.

5. The process of Claim 1 wherein the aromatic tetraamine is heated with the said dicarboxylic component, and in that component the said dicarboxylic acid is aromatic, the said aryl groups are phenyl, and the said alkyl groups contain 1 to 5 carbon atoms.

6. The process of Claim 5 wherein the said dicarboxylic component is a combination of phenylindandicarboxylic acid and diphenyl isophthalate or a combination of diphenic acid and diphenyl isophthalate or a combination of isophthalic acid and dimethyl isophthalate or a combination of dimethyl isophthalate and diphenyl isophthalate.

7. The process of Claim 5 wherein the said carboxylic component is dimethyl 2,6-naphthalenedicarboxylate.

8. The process of Claim 5 wherein the said dicarboxylic component is dimethyl isophthalate.

9. The process of Claim 1 wherein the aromatic tetraamine is heated with the said dicarboxylic component, not more than 50% of the said dicarboxylic component being diaryl ester.

10. The process of any of Claims 1-9 wherein a catalyst for the reaction is employed.

11. The process of Claim 10 wherein said catalyst is triphenyl phosphate.

## Revendications

1. Procédé en deux étapes pour produire des polybenzimidazoles consistant à chauffer dans une première étape un mélange d'au moins une tétraamine aromatique contenant deux paires de substituants amine sur un noyau aromatique dans la position ortho et de soit (i) au moins un acide dicarboxylique libre ou (ii) un composé dicarboxylique qui est soit 1) une combinaison d'au moins un acide dicarboxylique libre et d'au moins un diaryl ester d'un acide dicarboxylique, ou 2) une combinaison d'au moins un acide dicarboxylique libre et d'au moins un dialkyl ester d'un acide dicarboxylique, ou 3) une combinaison d'au moins un diaryl ester d'un acide dicarboxylique et d'au moins un dialkyl ester d'un acide dicarboxylique; ou 4) un dialkyl ester d'un acide dicarboxylique (à la

condition que pas plus de 95% dudit composé dicarboxylique soit diaryl ester), ledit chauffage étant suffisant pour amener le mélange à des températures de polymérisation par condensation au-dessus du point de fusion de ladite tétraamine, à continuer le chauffage avec agitation jusqu'à ce que le couple de l'agitateur soit environ 1,5 à environ 6 fois le couple avant que l'élévation en viscosité commence, à terminer l'agitation tout en continuant à chauffer le mélange réactionnel jusqu'à une température de 230 à 350 °C tout en permettant à la masse de former une mousse jusqu'à un degré substantiel, à refroidir jusqu'à obtenir une masse de mousse friable, à broyer la masse pour obtenir un prépolymère broyé et à chauffer le prépolymère broyé dans une deuxième étape à une température en excès de la température la plus élevée utilisée dans ladite première étape avec agitation jusqu'à ce qu'une viscosité inhérente en excès de 0,37dl/g soit obtenue.

2. Procédé suivant la revendication 1 dans lequel la tétraamine aromatique est du 3, 3', 4, 4'-tétraaminobiphényle.

3. Procédé suivant la revendication 1 ou 2, dans lequel la tétraamine aromatique est chauffée avec de l'acide dicarboxylique libre qui est de l'acide isophtalique.

4. Procédé suivant la revendication 1 ou 2, dans lequel la tetraamine aromatique est chauffée avec de l'acide dicarboxylique libre qui est l'acide diphénique et/ou l'acide 4, 4'-biphényldicarboxylique et/ou de l'acide phénylindandicarboxylique.

5. Procédé suivant la revendication 1, dans lequel la tétraamine aromatique est chauffée avec ledit composé dicarboxylique, et dans ce composé ledit acide dicarboxylique est aromatique, lesdits groupes aryle sont phényle, et lesdits groupes alkyle contiennent de 1 à 5 atomes de carbone.

6. Procédé suivant la revendication 5, dans lequel ledit composé dicarboxylique est une combinaison d'acide phénileindandicarboxylique et de diphényl isophtalate ou une combinaison d'acide diphénique et de diphényl isophtalate ou une combinaison d'acide isophtalique et de diméthyl isophtalate ou une combinaison de diméthyl isophtalate et de diphényl isophtalate.

7. Procédé suivant la revendication 5, dans lequel ledit composé carboxylique est du diméthyl 2,6-naphthalènedicarboxylate acide.

8. Procédé suivant la revendication 5, dans lequel ledit composé dicarboxylique est du diméthyl isophtalate.

9. Procédé suivant la revendication 1, dans lequel la tétraamine aromatique est chauffée avec ledit composé dicarboxylique, pas plus de 50% dudit composé dicarboxylique étant du diaryl ester.

10. Procédé suivant l'une quelconque des revendications 1 à 9, dans lequel un catalyseur pour la réaction est utilisé.

11. Procédé suivant la revendication 10, dans lequel ledit catalyseur est du triphényl phosphate.

## Patentansprüche

1. Zweistufiges Verfahren zur Bereitstellung von Polybenzimidazolen, umfassend in einer ersten Stufe das Erhitzen einer Mischung aus Wenigstens einem aromatischen Tetraamin, das zwei Paare von Amin-Substituenten an einem aromatischen Ring in ortho-Position enthält, und
(i) wenigstens einer freien Dicarbonsäure oder
(ii) einer Dicarbonsäure-Komponente, die entweder
1) eine Kombination aus wenigstens einer freien Dicarbonsäure und wenigstens einem Diarylester einer Dicarbonsäure oder
2) eine Kombination aus wenigstens einer freien Dicarbonsäure und wenigstens einem Dialkylester einer Dicarbonsäure oder
3) eine Kombination aus wenigstens einem Diarylester einer Dicarbonsäure und wenigstens einem Dialkylester einer Dicarbonsäure oder
4) ein Dialkylester einer Dicarbonsäure ist (mit der Maßgabe, daß nicht mehr als 95 % der

Dicarbonsäure-Komponente Diarylester ist), wobei das Erhitzen ausreicht, um die Mischung auf Temperaturen der Kondensations-Polymerisation oberhalb des Schmelzpunkts des Tetraamins zu bringen,
das Fortsetzen des Erhitzens unter Rühren, bis das Drehmoment des Rührers das 1,5- bis 6-fache des Drehmoments vor dem Beginn des Anstiegs der Viskosität ist,
das Beenden des Rührens, während das Erhitzen der Reaktionsmischung auf eine Temperatur von 230 °C bis 350 °C fortgesetzt wird, wobei man die Masse zu einem beträchtlichen Grad schäumen läßt,
das Abkühlen der bröckeligen geschäumten Masse,
das Grobzerkleinern der Masse zu einem gemahlenen Prepolymer und
das Erhitzen des gemahlenen Prepolymers in einer zweiten Stufe auf eine Temperatur oberhalb der höchsten, in der ersten Stufe angewandten Temperatur unter Rühren, bis eine logarithmische Viskositätszahl oberhalb von 0,37 dl/g erhalten worden ist.

**2.** Verfahren nach Anspruch 1, worin das aromatische Tetraamin 3,3',4,4'-Tetraaminobiphenyl ist.

**3.** Verfahren nach Anspruch 1 oder 2, worin das aromatische Tetraamin mit einer freien Dicarbonsäure erhitzt wird, die Isophthalsäure ist.

**4.** Verfahren nach Anspruch 1 oder 2, worin das aromatische Tetraamin mit einer freien Dicarbonsäure erhitzt wird, die Diphensäure und/oder 4,4'-Biphenyldicarbonsäure und/oder Phenylindandicarbonsäure ist.

**5.** Verfahren nach Anspruch 1, worin das aromatische Tetraamin mit der Dicarbonsäure-Komponente erhitzt wird und in der Komponente die Dicarbonsäure aromatisch ist, die Aryl-Gruppen Phenyl sind und die Alkyl-Gruppen 1 bis 5 Kohlenstoff-Atome enthalten.

**6.** Verfahren nach Anspruch 5, worin die Dicarbonsäure-Komponente eine Kombination aus Phenylindandicarbonsäure und Diphenylisophthalat oder eine Kombination aus Diphensäure und Diphenylisophthalat oder eine Kombination aus Isophthalsäure und Dimethylisophthalat oder eine Kombination aus Dimethylisophthalat und Diphenylisophthalat ist.

**7.** Verfahren nach Anspruch 5, worin die Dicarbonsäure-Komponente Dimethyl-2,6-naphthalin-dicarboxylatsäure ist.

**8.** Verfahren nach Anspruch 5, worin die Dicarbonsäure-Komponente Dimethylisophthalat ist.

**9.** Verfahren nach Anspruch 1, worin das aromatische Tetraamin mit der Dicarbonsäure-Komponente erhitzt wird, wobei nicht mehr als 50% der Dicarbonsäure-Komponente Diarylester ist.

**10.** Verfahren nach irgendeinem der Ansprüche 1 bis 9, worin ein Katalysator für die Reaktion eingesetzt wird.

**11.** Verfahren nach Anspruch 10, worin der Katalysator Triphenylphosphat ist.